# EUROPEAN PATENT APPLICATION

(11) **EP 4 546 457 A1**
(43) Date of publication of application: **30.04.2025**
(21) Application number: 23860852.5
(22) Date of filing: 29.08.2023
(51) Int. Cl.: H01M 4/36, H01M 4/38, C01B 33/02, H01M 4/02

(54) **NEGATIVE ELECTRODE ACTIVE MATERIAL PARTICLES, NEGATIVE ELECTRODE COMPRISING NEGATIVE ELECTRODE ACTIVE MATERIAL PARTICLES, AND SECONDARY BATTERY INCLUDING NEGATIVE ELECTRODE**

(30) Priority: 31.08.2022 KR 20220110315
(71) Applicant: LG Energy Solution, Ltd., Seoul 07335 (KR)
(72) Inventor: JUN, Hyun Min, Daejeon 34122 (KR); LEE, Yong Ju, Daejeon 34122 (KR); KIM, Dong Hyuk, Daejeon 34122 (KR); KIM, Do Hyeun, Daejeon 34122 (KR)
(74) Representative: Hoffmann Eitle
(86) International application number: PCT/KR2023/012818
(87) International publication number: WO 2024/049176

(57) **Abstract**

The present invention relates to negative electrode active material particles, a negative electrode comprising the negative electrode active material particles, and a secondary battery including the negative electrode. Specifically, the negative electrode active material particles are characterized by including a core and a coating layer disposed on the core, the core including silicon-based particles, and the coating layer containing a polymer that includes an aromatic cyclic monomer unit having an alkyl group and including a hetero atom, and thus side reactions such as hydrogen gas generation can be prevented during aqueous mixing of a slurry without an increase in resistance.

## Description

### TECHNICAL FIELD

### Cross-reference to Related Applications

This application claims the priority benefit of Korean Patent Application No. 10-2022-0110315, filed on August 31, 2022, in the Korean Intellectual Property Office, the contents of which are incorporated herein by reference.

### Technical Field

The present disclosure relates to a negative electrode active material particle, a negative electrode comprising the same, and a secondary battery comprising the negative electrode. Specifically, the negative electrode active material particle includes a core and a coating layer on the core, and the coating layer includes a polymer including an aromatic cyclic monomer unit including a heteroatom and having an alkyl group at a side chain.

### BACKGROUND ART

According to the rapid increase of the use of fossil fuels, requirement on the use of alternative energy or clean energy is increasing, and as the parts thereof, the fields of electricity generation and power accumulation using electrochemical reactions are the most actively studied fields.

Recently, a typical example of electrochemical devices using the electrochemical energy includes secondary batteries, and the area using the secondary batteries is gradually expanding. Recently, according to the increase of technology development and demand on portable devices such as portable computers, portable cellular phones and cameras, the demand on the secondary batteries as energy sources is rapidly increasing, and among the secondary batteries, lithium secondary batteries having high energy density, i.e., high capacity have been studied a lot, commercialized and widely used.

Generally, a secondary battery is composed of a positive electrode, a negative electrode, an electrolyte and a separator. The negative electrode includes a negative electrode active material which intercalates and deintercalates lithium ions from the positive electrode, and as the negative electrode active material, silicon-based particles having large discharge capacity may be used.

Meanwhile, the negative electrode may be formed by applying a negative electrode slurry on a negative electrode current collector and drying. In this case, if the negative electrode slurry including silicon-based particles is mixed using water as a solvent (hereinafter, aqueous mixing), the silicon-based particles and water react to produce silicon dioxide and hydrogen gas. The hydrogen gas remains as a bubble type in the negative electrode slurry, and it is difficult to form a uniform negative electrode active material layer. In addition, the hydrogen gas remaining on the negative electrode is combustible and explosive gas and can be a great danger during the manufacturing process and the driving of a battery.

Conventionally, technique of forming a carbon coating layer on silicon-based particles has been used to solve the defects. However, according to the lapse of time from the forming of the negative electrode slurry, humidity may penetrate into the carbon coating layer, or oxygen may be injected through cracks in the carbon coating layer, and thus, there are defects in that the contact between the humidity and the silicon-based particles cannot be blocked effectively.

Accordingly, there is provided a negative electrode active particle, which may minimize the production of hydrogen gas during the mixing of a negative electrode slurry and a method of preparing a negative electrode active particle.

### DISCLOSURE OF THE INVENTION

### TECHNICAL PROBLEM

A task for solving in the present disclosure is to provide a negative electrode active material particle which is capable of minimizing the production of hydrogen gas during a mixing process of a negative electrode slurry.

Another task for solving in the present disclosure is to provide a method for preparing the negative electrode active material particle.

Another task for solving in the present disclosure is to provide a negative electrode comprising the negative electrode active material particle.

Another task for solving in the present disclosure is to provide a secondary battery comprising the negative electrode.

### TECHNICAL SOLUTION

According to an embodiment of the present disclosure, there is provided a negative electrode active material particle comprising a core and a coating layer on the core, wherein the core comprises a silicon-based particle, and the coating layer comprises a polymer comprising an aromatic cyclic monomer unit comprising a heteroatom and having an alkyl group at a side chain.

According to another embodiment of the present disclosure, there is provided a method for preparing a negative electrode active material particle, comprising a step of injecting a core particle comprising a silicon-based particle into a coating solution comprising a polymer comprising an aromatic cyclic monomer unit comprising a heteroatom and having an alkyl group at a side chain.

According to another embodiment of the present disclosure, there is provided a negative electrode comprising the negative electrode active material particle.

According to another embodiment of the present disclosure, there is provided a secondary battery comprising the negative electrode.

### ADVANTAGEOUS EFFECTS

The negative electrode active material particle according to an embodiment of the present disclosure includes a coating layer including a polymer including an aromatic cyclic monomer unit including a heteroatom and having an alkyl group at a side chain on the surface of a core including a silicon-based particle, and the reaction between water and the silicon-based particle during the aqueous mixing of a negative electrode slurry may be suppressed, and the production of hydrogen gas may be minimized. Accordingly, safety during the manufacturing process of a negative electrode and the driving of a battery may be improved.

In addition, according to a method for preparing a negative electrode active material particle according to another embodiment of the present disclosure, a coating layer is formed on a core using a coating solution including a solvent and a polymer including an aromatic cyclic monomer unit including a heteroatom and having an alkyl group at a side chain, and the polymer including the alkyl chain at the side chain may be effectively coated on the core including a silicon-based particle.

### BRIED DESCRIPTION OF DRAWINGS

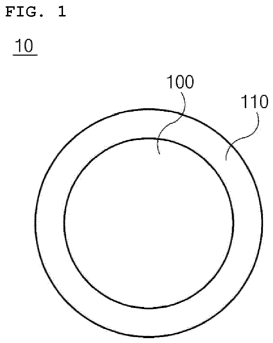

FIG. 1 is a schematic diagram showing a negative electrode active material particle according to an embodiment of the present disclosure.

### MODE FOR CARRYING OUT THE INVENTION

Hereinafter, the present disclosure will be explained in more detail to assist the understanding of the present disclosure.

It will be understood that words or terms used in the present disclosure and claims shall not be interpreted as the meaning defined in commonly used dictionaries. It will be further understood that the words or terms should be interpreted as having a meaning that is consistent with the technical idea of the invention, based on the principle that an inventor may properly define the meaning of the words or terms to best explain the invention.

The terminology used herein is for the purpose of describing particular example embodiments only and is not intended to limit the present inventive concept. The singular forms are intended to include the plural forms as well, unless the context clearly indicates otherwise.

It will be further understood that the terms "comprises", "provided" or "having," when used in this specification, specify the presence of stated features, numerals, steps, elements, or combinations thereof, but do not preclude the presence or addition of one or more other features, numerals, steps, elements or combinations thereof.

In the description, an average particle diameter (D₅₀) may be defined as a particle diameter corresponding to 50% of an accumulated volume on a particle diameter distribution curve. The average particle diameter (D₅₀) may be measured using, for example, a laser diffraction method. The laser diffraction method generally enables the measurement from a submicron region to several mm levels of the diameter and achieves high reproducibility and high resolution.

In the description, a "weight average molecular weight (Mw)" means a conversion value with respect to standard polystyrene measured by gel permeation chromatography (GPC). Particularly, the weight average molecular weight is a conversion value of a value measured using GPC by the conditions below, and standard polystyrene of Agilent system was used for the formation of a calibration curve.

### <Measurement Conditions>

Measurement instrument: Agilent GPC (Agulent 1200 series, USA)
Column: connect two PL Mixed B
Column temperature: 40°C
Eluent: tetrahydrofuran
Flow rate: 1.0 mL/min
Concentration: - 1 mg/mL (100 µL injection)

In the description, the content (wt%) of the "polymer including an alkyl chain at a side chain" in the negative electrode active material particle may be confirmed through TGA. In this case, measurement conditions are as follows.
Measurement Instrument: Seiko Exstar 600 of Seiko Co.
Injection Gas (atmospheric gas): Ar
Temperature Elevation Rate: 5°C/min
Measurement Amount of Sample: 10 mg

### <Negative Electrode Active Material Particle>

Referring to FIG. 1, a negative electrode active material particle (10) includes a core (100) and a coating layer (110) on the core, the core (100) includes a silicon-based particle, and the coating layer (110) may include a polymer including an aromatic cyclic monomer unit including a heteroatom and having an alkyl group at a side chain.

The core may include a silicon-based particle, and particularly, the core may be composed of a silicon-based particle. If the core is the silicon-based particle, one silicon-based particle may correspond to one core.

The silicon-based particle may include SiOₓ (0≤x<2). The SiOₓ (0≤x<2) may have a type including Si and SiO₂, and the Si may form a phase. That is, x corresponds to the number ratio of O to Si, included in the SiOₓ (0≤x<2). If the silicon-based particle includes the SiOₓ (0≤x<2), the discharge capacity of a secondary battery may be improved. Particularly, the silicon-based particle may be a particle composed of Si.

The average particle diameter (D₅₀) of the silicon-based particles may be from 0.1 µm to 100 µm, particularly, 1 µm to 10 µm, more particularly, 4 µm to 6 µm. If the range is satisfied, the internal and external reactions of the silicon-based particle may be carried out uniformly during the driving process of a battery, and pore structures in the negative electrode active material layer may be effectively formed to achieve uniform reaction in the negative electrode active material layer. Accordingly, the lifetime of the battery may be improved.

The coating layer may be positioned on the core. Particularly, the coating layer may cover at least a portion of the surface of the core.

The coating layer may include a polymer including an aromatic cyclic monomer unit including a heteroatom and having an alkyl group at a side chain. Since the coating layer includes the polymer including an aromatic cyclic monomer unit including a heteroatom and having an alkyl group at a side chain, if a negative electrode slurry including a negative electrode active material particle is subjected to aqueous mixing, the reaction of the silicon-based particle of the core with water is suppressed, and the production amount of hydrogen gas may be reduced. Accordingly, the safety during the manufacturing process of a negative electrode and the driving of a battery may be improved.

In the polymer, the alkyl group may be an alkyl group of 1 to 50 carbon atoms, preferably, an alkyl group of 3 to 40 carbon atoms, an alkyl group of 3 to 30 carbon atoms, more preferably, an alkyl group of 3 to 20 carbon atoms, particularly, an alkyl group of 5 to 15 carbon atoms, more particularly, an alkyl group of 7 to 9 carbon atoms. If the alkyl group satisfying the above-described carbon number range is included as a side chain, the reaction between the silicon-based particle and water during the aqueous mixing of a negative electrode slurry may be suppressed more effectively, and the production amount of the hydrogen gas may be effectively reduced. In addition, since the alkyl group is not too long, the intercalation-deintercalation of lithium ions at the negative electrode may be effectively achieved, and the capacity reduction of the negative electrode active material particle may be minimized.

In addition, the polymer may include one or more atoms selected from the group consisting of nitrogen (N), sulfur (S) and phosphor (P), preferably, one or more selected from nitrogen and sulfur. The heteroatom may provide surplus electrons in contrast to a case of including only carbon, and through this, electron movement via π-π bonds may be free to contribute to the improvement of conductivity. In addition, since the bonding force between the core of a silicon-based core and a polymer coating layer is insufficient, separation phenomenon of the coating layer may occur, and thus, a polymer including a heteroatom is applied, preferably.

Further, the polymer includes an aromatic cyclic monomer unit. A chain-type polymer, even if a conductive polymer, may not achieve a desired degree of conductivity, if an atom having high electronegativity is not additionally doped. Even if a heteroatom is included, the flexibility of a main chain of the chain-type polymer may be high in contrast to a case of including an aromatic cyclic monomer unit as a basic unit, the polymer may tend to get tangled at the surface of the core in a swelling state in a solvent during a coating process, absorption at the surface of the core may not be smooth, and the improving effects of conductivity or adhesiveness with the core may not be achieved. In the case of an aliphatic cyclic monomer unit, electron movement may not be free, inappropriately.

The polymer including an aromatic cyclic monomer unit including a heteroatom and including an alkyl group at a side chain may include at least one selected from the group consisting of a polymer including a repeating unit of Formula 1, a polymer including a repeating unit of Formula 2, and a polymer including a repeating unit of Formula 3.

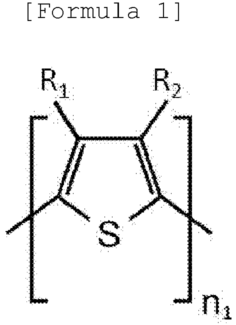

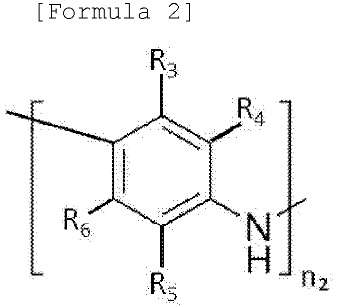

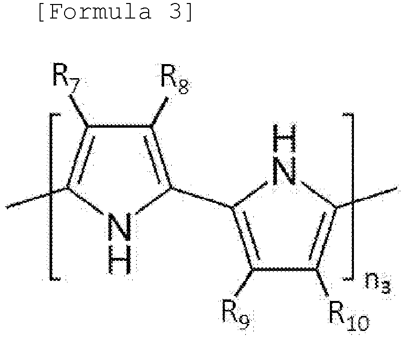

In Formula 1, R₁ and R₂ are each independently one among hydrogen and an alkyl group of 5 to 15 carbon atoms, and at least one among R₁ and R₂ is an alkyl group of 5 to 15 carbon atoms. In Formula 1, the alkyl group of 5 to 15 carbon atoms may particularly be an alkyl group of 7 to 9 carbon atoms, more particularly, -C₈H₁₇. n₁ may be an integer of 1 to 10,000, particularly, an integer of 10 to 1,000, more particularly, an integer of 100 to 500. The polymer including the repeating unit of Formula 1 may be poly(3-octylthiophene) including a repeating unit of Formula 1-1.

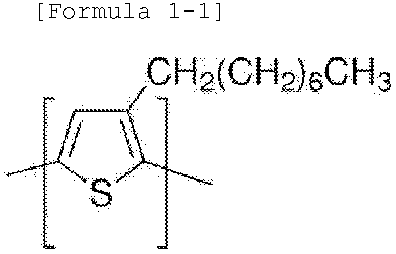

In Formula 2, R₃ to R₆ are each independently one among hydrogen and an alkyl group of 5 to 15 carbon atoms, and at least one among R₃ to R₆ is an alkyl group of 5 to 15 carbon atoms. In Formula 2, the alkyl group of 5 to 15 carbon atoms may particularly be an alkyl group of 7 to 9 carbon atoms, more particularly, -C₈H₁₇. n₂ may be an integer of 1 to 10,000, particularly, an integer of 10 to 1,000, more particularly, an integer of 100 to 500. The polymer including the repeating unit of Formula 2 may be a polymer including a repeating unit of Formula 2-1.

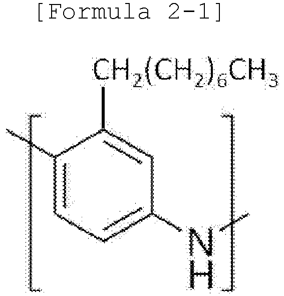

In Formula 3, R₇ to R₁₀ are each independently one among hydrogen and an alkyl group of 5 to 15 carbon atoms, and at least one among R₇ to R₁₀ is an alkyl group of 5 to 15 carbon atoms. In Formula 3, the alkyl group of 5 to 15 carbon atoms may particularly be an alkyl group of 7 to 9 carbon atoms, more particularly, -C₈H₁₇. n₃ may be an integer of 1 to 10,000, particularly, an integer of 10 to 1,000, more particularly, an integer of 100 to 500. The polymer including the repeating unit of Formula 3 may be a polymer including a repeating unit of Formula 3-1.

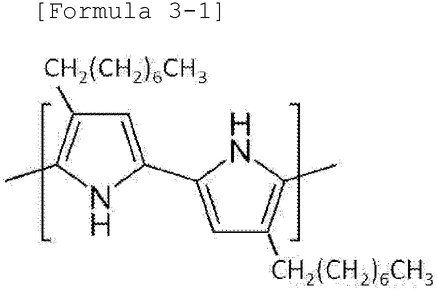

That is, the polymer including an aromatic cyclic monomer unit including a heteroatom and having an alkyl group at a side chain may include poly(3-octylthiophene) or poly(3-octylpyrrole), and preferably, the polymer including an aromatic cyclic monomer unit including a heteroatom and having an alkyl group at a side chain may be poly(3-octylthiophene). If a polymer selected from Formula 1-1 to Formula 1-3 is included as the polymer including an aromatic cyclic monomer unit including a heteroatom and having an alkyl group at a side chain, the reaction between silicon-based particles and water during carrying out the aqueous mixing of a negative electrode slurry may be suppressed more effectively, and the production amount of hydrogen gas may be markedly reduced. Also, since the polymer has high conductivity, the conductivity in the negative electrode may be improved to improve the lifetime of a battery and rapid charging performance.

The weight average molecular weight of the polymer including an aromatic cyclic monomer unit including a heteroatom and having an alkyl group at a side chain may be 200 g/mol to 2,000,000 g/mol, particularly, 2,000 g/mol to 200,000 g/mol, more particularly, 10,000 g/mol or more, 15,000 g/mol or more, 20,000 g/mol or more, or 25,000 g/mol or more, and 150,000 g/mol or less, 130,000 g/mol or less, 100,000 g/mol or less, or 90,000 g/mol or less. If the above-described range is satisfied, the polymer including an aromatic cyclic monomer unit including a heteroatom and having an alkyl group at a side chain may be uniformly coated on the entire surface of the silicon-based particles, and agglomeration of the polymer with the silicon-based particles may be prevented during preparing a negative electrode active material.

The polymer including an alkyl chain at a side chain may be included in the negative electrode active material particles in 0.1 wt% to 50 wt%, particularly, 1.0 wt% or more, 3.0 wt% or more, 4.0 wt% or more, 5.0 wt% or more, 6.0 wt% or more, or 7.0 wt% or more, and 30 wt% or less, 25 wt% or less, 20 wt% or less, 18 wt% or less, 15 wt% or less, or 12 wt% or less. If the above-described range is satisfied, the capacity per weight of the negative electrode active material particles may be maintained to a suitable level, lithium ions may easily diffuse into the core, and the lifetime of a negative electrode and a battery may be improved.

The average particle diameter (D₅₀) of the negative electrode active material particles may be 0.1 µm to 150 µm, particularly, 1 µm to 20 µm, more particularly, 3 µm to 10 µm, for example, 5 µm to 7 µm. If the above-described range is satisfied, the production of a gas during preparing a negative electrode slurry may be effectively suppressed, and the lifetime and rapid charging performance of a battery may be improved even further.

### <Method for preparing negative electrode active material particles>

A method for preparing negative electrode active material particles according to another embodiment of the present disclosure may include a step of injecting core particles including silicon-based particles into a coating solution including a solvent and a polymer including an alkyl chain at a side chain.

Here, the negative electrode active material particle may be the same as the above-described negative electrode active material particle of an embodiment. In addition, the core particle may correspond to the core included in the above-described negative electrode active material particle of an embodiment. In addition, the polymer including an alkyl chain at a side chain may correspond to the above-described polymer including an alkyl chain at a side chain of an embodiment. Accordingly, the explanation thereof will be omitted. On the core particle, the polymer including an alkyl chain at a side chain may be disposed, and the above-described coating layer referred to in the embodiment may be formed.

The coating solution may include a solvent and a polymer including an alkyl chain at a side chain.

The solvent may include at least one selected from the group consisting of chloroform, toluene, hexane, benzene and tetrahydrofuran. The polymer including an alkyl chain at a side chain shows hydrophobicity. Accordingly, if the solvent includes at least one selected from the group consisting of chloroform, toluene, hexane, benzene and tetrahydrofuran, the polymer including an alkyl chain at a side chain may be effectively dispersed in the solvent. Accordingly, the coating layer may have a uniform thickness and be formed stably.

After the injection step, the coating solution including the silicon-based particles may be stirred to put the polymer including an alkyl chain at a side chain on the silicon-based particles.

### <Negative Electrode>

A negative electrode according to another embodiment of the present disclosure may include the negative electrode active material particles. Here, the negative electrode active material particles may be the same as the negative electrode active material particles of the above-described embodiments. Particularly, the negative electrode may include a negative electrode current collector and a negative electrode active material layer disposed on the negative electrode current collector. The negative electrode active material layer may include the negative electrode active material particles. Further, the negative electrode active material layer may further include a negative electrode binder and/or a negative electrode conductive agent.

The negative electrode current collector is not specifically limited as long as it does not induce the chemical change of a battery and has conductivity. For example, the current collector may use copper, stainless steel, aluminum, nickel, titanium, baked carbon, or aluminum or stainless steel, surface-treated with carbon, nickel, titanium, silver, or the like. Particularly, a transition metal adsorbing carbon well, such as copper and nickel may be used as the current collector. The thickness of the current collector may be 6 µm to 20 µm, but the thickness of the current collector is not limited thereto.

The negative electrode binder may include at least one selected from the group consisting of a polyvinylidene fluoride-hexafluoropropylene copolymer (PVDF-co-HFP), polyvinylidene fluoride, polyacrylonitrile, polymethyl methacrylate, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, polyacrylic acid, an ethylene-propylene-diene monomer (EPDM), a sulfonated EPDM, a styrene-butadiene rubber (SBR), a fluoro rubber, polyacrylic acid and materials in which the hydrogen thereof is substituted with Li, Na or Ca, and diverse copolymers thereof may be included.

The negative electrode conductive agent is not specifically limited as long as it does not induce the chemical change of a battery and has conductivity, and may include: for example, graphite such as natural graphite and artificial graphite; carbon black such as acetylene black, Ketjen black, channel black, furnace black, lamp black and thermal black; conductive fibers such as carbon fibers and metal fibers; conductive tubes such as carbon nanotubes; fluorocarbon powder; metal powder such as aluminum powder and nickel powder; conductive whiskers such as zinc oxide whiskers and potassium titanate whiskers; conductive metal oxides such as titanium oxide; and conductive materials such as polyphenylene derivatives.

### <Secondary Battery>

A secondary battery according to another embodiment of the present disclosure may include the above-described negative electrode of an embodiment. Particularly, the secondary battery may include a negative electrode, a positive electrode, a separator disposed between the positive electrode and the negative electrode, and an electrolyte, and the negative electrode is the same as the above-described negative electrode. Since the negative electrode has been explained above, particular explanation thereof will be omitted.

The positive electrode may include a positive electrode current collector and a positive electrode active material layer formed on the positive electrode current collector and including the positive electrode active material.

In the positive electrode, the positive electrode current collector is not specifically limited as long as it does not induce the chemical change of a battery and has conductivity. For example, stainless steel, aluminum, nickel, titanium, baked carbon, or aluminum or stainless steel, surface-treated with carbon, nickel, titanium, silver, or the like may be used. In addition, the positive electrode current collector may generally have a thickness of 3 to 500 µm, and may reinforce the adhesiveness of the positive electrode active material by forming minute embossing at the surface of the current collector. For example, various shapes including a film, a sheet, a foil, a net, a porous body, a foamed body, a non-woven fabric, or the like may be used.

The positive electrode active material may be a generally used positive electrode active material. Particularly, the positive electrode active material may be layered compounds of lithium cobalt oxide (LiCoO₂), lithium nickel oxide (LiNiO₂), or the like, or compounds substituted with one or more transition metals; lithium iron oxide such as LiFe₃O₄ or the like; lithium manganese oxides such as the chemical formula of Li_{1+c1}Mn_{2-c1}O₄ (0≤c1≤0.33), LiMnO₃, LiMn₂O₃, LiMnO₂ or the like; lithium copper oxide (Li₂CuO₂); vanadium oxides such as LiV₃O₈, V₂O₅, Cu₂V₂O₇ or the like; Ni site-type lithium nickel oxides represented by the chemical formula of LiNi_{1-c2}M_{c2}O₂ (here, M is at least one selected from the group consisting of Co, Mn, Al, Cu, Fe, Mg, B and Ga, and 0.01≤c2≤0.3); lithium manganese composite oxides represented by LiMn_{2-c3}M_{c3}O₂ (here, M is at least one selected from the group consisting of Co, Ni, Fe, Cr, Zn and Ta, and 0.01≤c3≤0.1) or Li₂Mn₃MO₈ (here, M is at least one selected from the group consisting of Fe, Co, Ni, Cu and Zn); LiMn₂O₄ in which a portion of Li is substituted with alkaline earth metal ion, or the like, but is not limited thereto. The positive electrode may be Li-metal.

The positive electrode active material layer may include a positive electrode conductive agent and a positive electrode binder together with the above-described positive electrode active material.

In this case, the positive electrode conductive agent is used to impart the electrode with conductivity, and may use any material without specific limitation as long as it does not induce the chemical change of a battery and has conductivity in a battery. Particular examples may include: graphite such as natural graphite and artificial graphite; carbonaceous materials such as carbon black, acetylene black, Ketjen black, channel black, furnace black, lamp black, thermal black and carbon fibers; metal powder or metal fibers of copper, nickel, aluminum, silver, or the like; conductive whiskers such as zinc oxide whiskers and potassium titanate whiskers; conductive metal oxides such as titanium oxide; and conductive polymers such as polyphenylene derivatives, and a single material or mixtures of two or more thereof may be used.

In addition, the positive electrode binder plays the role of improving the adhesiveness among positive electrode active material particles and between the positive electrode active material and the positive electrode current collector. Particular examples may include polyvinylidene fluoride (PVDF), a vinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated EPDM, a styrene-butadiene rubber (SBR), a fluoro rubber, or diverse copolymers thereof, and a single material or mixtures of two or more thereof may be used.

As the separator, a commonly used separator in a secondary battery, which separates a negative electrode and a positive electrode and provides the moving passage of lithium ions, may be used without specific limitation, particularly, a separator having low resistance to the movement of the ions of an electrolyte and excellent absorption capacity of an electrolyte solution is preferable. Particularly, a porous polymer film, for example, a porous polymer film formed from a polyolefin-based polymer such as an ethylene homopolymer, a propylene homopolymer, an ethylene/butene copolymer, an ethylene/hexene copolymer and an ethylene/mathacrylate copolymer; or a stacked structure of two or more layers thereof, may be used. In addition, a commonly used porous non-woven fabric, for example, a glass fiber having a high melting point, a non-woven fabric of a polyethylene terephthalate fiber, or the like, may be used. In addition, in order to secure heat resistance and mechanical strength, a coated separator including a ceramic component or a polymer material may be used, optionally, in a single layer or a multilayer structure.

The electrolyte may include an organic liquid electrolyte, an inorganic liquid electrolyte, a solid polymer electrolyte, a gel-type polymer electrolyte, a solid inorganic electrolyte, a molten-type inorganic electrolyte, or the like, which may be used when manufacturing a lithium secondary battery, without limitation.

Particularly, the electrolyte may include a non-aqueous organic solvent and a metal salt.

The non-aqueous organic solvent may use an aprotic organic solvent, for example, N-methyl-2-pyrrolidinone, propylene carbonate, ethylene carbonate, butylene carbonate, dimethyl carbonate, diethyl carbonate, gamma-butyrolactone, 1,2-dimethoxy ethane, tetrahydrofuran, 2-methyl tetrahydrofuran, dimethylsulfoxide, 1,3-dioxolane, formamide, dimethylformamide, dioxolane, acetonitrile, nitromethane, methyl formate, methyl acetate, phosphoric acid triester, trimethoxymethane, dioxolane derivatives, sulfolane, methyl sulfolane, 1,3-dimethyl-2-imidazolidinone, propylene carbonate derivatives, tetrahydrofuran derivatives, ether, methyl propionate, ethyl propionate, or the like.

Particularly, among the carbonate-based organic solvents, ethylene carbonate and propylene carbonate, which are cyclic carbonates, are organic solvents having a high viscosity and have high dielectricity, dissociate lithium salts well and are preferably used. If linear carbonate having a low viscosity and a low dielectricity, such as dimethyl carbonate and diethyl carbonate is mixed in an appropriate ratio with the cyclic carbonate and used, an electrolyte having high electric conductivity may be formed, and may be used preferably.

The metal salt may use a lithium salt, and the lithium salt is a material easily dissolved in the non-aqueous electrolyte solution, and the anion of the lithium salt may use, for example, one or more selected from the group consisting of F⁻, Cl⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻.

In the electrolyte, one or more additives may be further included in addition to the constituent components of the electrolyte for the purpose of improving the life characteristics of a battery, suppressing the reduction of battery capacity, and improving the discharge capacity of a battery. For example, haloalkylene carbonate-based compounds such as difluoroethylene carbonate, pyridine, triethylphosphite, triethanolamine, cyclic ether, ethylenediamine, n-glyme, triamide hexaphosphate, nitrobenzene derivatives, sulfur, a quinone imine dye, N-substituted oxazolidinone, N,N-substituted imidazolidine, ethylene glycol dialkyl ether, ammonium salts, pyrrole, 2-methoxyethanol or aluminum trichloride, may be used.

According to another embodiment of the present disclosure, a battery module including the secondary battery as a unit cell and a battery pack including the battery module are provided. The battery module and the battery pack include the secondary battery having high capacity, high rate capability and cycle properties, and may be used as a power source of a medium and large sized device selected from the group consisting of an electric vehicle, a hybrid electric vehicle, a plug-in hybrid electric vehicle and a power storage system.

Hereinafter, preferred embodiments will be suggested to assist the understanding of the present disclosure, but the embodiments are illustrations of the present description, and it would be obvious to a person skilled in the art that various changes and modifications are possible within the scope and technical spirit of the present description, and the changes and modifications are included in the claims attached herein.

### Examples and Comparative Examples

### Example 1: Preparation of Negative Electrode Active Material Particles

A coating solution in which 10 g of poly(3-octylthiophene) including a repeating unit of Formula 1-1 was dispersed in 50 g of chloroform, was prepared. In addition, silicon particles having an average particle diameter (D₅₀) of 5 µm were prepared as core particles.

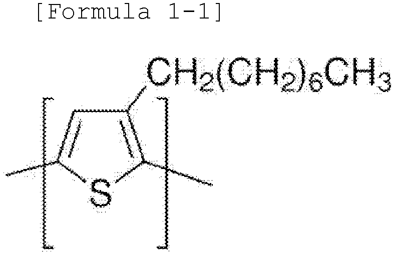

The core particles were injected into the coating solution, and stirring was performed using a magnetic bar and a magnetic stirrer for 2 hours to prepare negative electrode active material particles.

The average particle diameter (D₅₀) of the negative electrode active material particles was 6 µm, and the weight average molecular weight of the poly(3-octylthiophene) was 30,000. In addition, the poly(3-octylthiophene) was included in the negative electrode active material particles in 6 wt%.

### Example 2: Preparation of Negative Electrode Active Material Particles

Negative electrode active material particles were prepared by the same method as Example 1, except for controlling the content of the poly (3-octylthiopene) in the negative electrode active material particles to 12 wt%.

### Example 3: Preparation of Negative Electrode Active Material Particles

Negative electrode active material particles were prepared by the same method as Example 1, except for using a polymer including a repeating unit of Formula 2-1 and having a weight average molecular weight of 30,000 instead of the poly(3-octylthiophene).

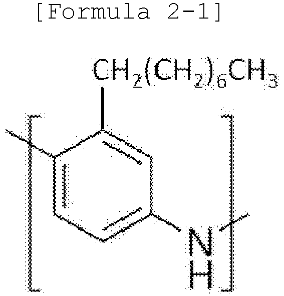

### Example 4: Preparation of Negative Electrode Active Material Particles

Negative electrode active material particles were prepared by the same method as Example 3, except for controlling the content of the polymer including the repeating unit of Formula 2-1 in the negative electrode active material particles to 7 wt%.

### Example 5: Preparation of Negative Electrode Active Material Particles

Negative electrode active material particles were prepared by the same method as Example 1, except for using a polymer including a repeating unit of Formula 3-1 and having a weight average molecular weight of 30,000 instead of the poly(3-octylthiophene).

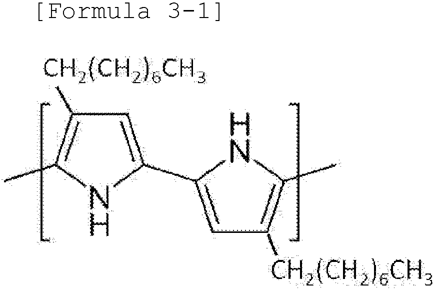

### Example 6: Preparation of Negative Electrode Active Material Particles

Negative electrode active material particles were prepared by the same method as Example 3, except for controlling the content of the polymer including the repeating unit of Formula 3-1 in the negative electrode active material particles to 7 wt%.

### Example 7: Preparation of Negative Electrode Active Material Particles

Negative electrode active material particles were prepared by the same method as Example 1, except for controlling the content of the poly(3-octylthiophene) in the negative electrode active material particles to 5 wt%.

### Example 8: Preparation of Negative Electrode Active Material Particles

Negative electrode active material particles were prepared by the same method as Example 1, except for controlling the content of the poly(3-octylthiophene) in the negative electrode active material particles to 7 wt%.

### Example 9: Preparation of Negative Electrode Active Material Particles

Negative electrode active material particles were prepared by the same method as Example 1, except for controlling the content of the poly(3-octylthiophene) in the negative electrode active material particles to 9 wt%.

### Example 10: Preparation of Negative Electrode Active Material Particles

Negative electrode active material particles were prepared by the same method as Example 1, except for using poly(3-octylthiophene) having a weight average molecular weight of 20,000.

### Example 11: Preparation of Negative Electrode Active Material Particles

Negative electrode active material particles were prepared by the same method as Example 1, except for using poly(3-octylthiophene) having a weight average molecular weight of 100,000.

### Comparative Example 1: Preparation of Negative Electrode Active Material Particles

Silicon particles having an average particle diameter (D₅₀) of 5 µm were prepared as negative electrode active material particles.

### Comparative Example 2: Preparation of Negative Electrode Active Material Particles

A coating solution in which 10 g of polythiophene including no alkyl chain at a side chain was dispersed in 50 g of chloroform, was prepared. In addition, silicon particles having an average particle diameter (D₅₀) of 5 µm were prepared as core particles.

The core particles were injected into the coating solution, and stirring was performed using a magnetic bar and a magnetic stirrer for 2 hours to prepare negative electrode active material particles.

The average particle diameter (D₅₀) of the negative electrode active material particles was 6 µm, and the weight average molecular weight of the polythiophene was 20,000. In addition, the polythiophene was included in the negative electrode active material particles in 5 wt%.

### Comparative Example 3: Preparation of Negative Electrode Active Material Particles

Negative electrode active material particles were prepared by the same method as Example 1, except for using a polymer including an octyl group as a side chain in polyethyleneimine instead of the poly(3-octylthiophene).

### Comparative Example 4: Preparation of Negative Electrode Active Material Particles

Negative electrode active material particles were prepared by the same method as Example 1, except for using a polymer including an octyl group as a side chain in polyacetylene instead of the poly(3-octylthiophene).

### Comparative Example 5: Preparation of Negative Electrode Active Material Particles

Negative electrode active material particles were prepared by the same method as Example 1, except for using poly(p-phenylenevinylene-2,5-dioctyl-p-phenylenevinylene) instead of the poly(3-octylthiophene).

### Comparative Example 6: Preparation of Negative Electrode Active Material Particles

Negative electrode active material particles were prepared by the same method as Example 1, except for using poly(1,4-piperazinediyl-1-oxo-trimethylene) instead of the poly(3-octylthiophene).

### Experimental Example 1: Evaluation of Compression Conductivity of negative electrode active material particles

The compression conductivity of the negative electrode active material particles was evaluated by a method below.

Multiple negative electrode active material particles in a particulate state were compressed into a cylindrical shape, while applying a current passing through the top and bottom of the sample of the compressed negative electrode active material particles, and the electric conductivity of the compressed negative electrode active material particles was measured. The results are shown in Table 1.
Measurement Instrument: HPRM-FA2 of HANTECH Co.
Loading Amount of Sample: 3 g
Diameter of Sample Loader: 20 mm
Pressurized Pressure: 2,000 kgf/cm²
Applied Voltage to Sample: 10 V

### Experimental Example 2: Evaluation of Production Amount of Hydrogen Gas of Negative Electrode Slurry

Negative electrode slurries were prepared using the negative electrode active material particles of the Examples and Comparative Examples. Particularly, the negative electrode active material particles, a binder of CMC, a conductive agent of Super 65 and single-walled carbon nanotubes were injected into water in a ratio of 80:9:10:1 to prepare a mixture, and the mixture was dispersed at a rate of 2,500 rpm for 60 minutes using a homomixer to prepare a negative electrode slurry (the solid content of 30%).

In a constant temperature chamber of 40°C, 4 g of the negative electrode slurry was injected into a 5 ml, measurement vessel, and the production amount of hydrogen gas was evaluated through an instrument for measuring the pressure by the gas. The results are shown in Table 1.

### Experimental Example 3: Evaluation of Lifetime (Capacity Retention Ratio)

Negative electrodes and batteries were manufactured using the negative electrode active materials of the Examples and Comparative Examples.

Negative electrode slurries were prepared using the negative electrode active material particles of the Examples and Comparative Examples. Particularly, the negative electrode active material particles, a binder of CMC, a conductive agent of Super 65 and single-walled carbon nanotubes were injected into water in a ratio of 80:9:10:1 to prepare a mixture, and the mixture was dispersed at a rate of 2,500 rpm for 60 minutes using a homomixer to prepare a negative electrode slurry.

The negative electrode slurry was applied on a copper (Cu) metal thin film having a thickness of 20 µm, which was a negative electrode current collector, and dried. In this case, the temperature of circulating air was 60°C. Then, roll pressing was performed, and drying in a vacuum oven of 130°C was performed for 12 hours to manufacture a negative electrode.

The negative electrode thus manufactured, and a lithium (Li) metal thin film cut into a circle of 1,7671 cm² as a positive electrode, were prepared. Between the positive electrode and the negative electrode, a separator of a porous polyethylene was disposed, and an electrolyte was injected thereto to manufacture a lithium coin half-cell, wherein in the electrolyte, 0.5 wt% of vinylene carbonate was dissolved in a mixture solution of ethylmethyl carbonate (EMC) and ethylene carbonate (EC) in a volume ratio of 7:3, and LiPF₆ of 1 M concentration was dissolved.

With respect to the batteries, charge and discharge were performed, and discharge capacity, initial efficiency, and capacity retention ratios were evaluated, and the results are shown in Table 1.

At the first cycle and the second cycle, charge and discharge were performed with 0.1 C, and at the third to the 49^{th} cycles, charge and discharge were performed with 0.5 C. The 300^{th} cycle was finished in a charge state (a state in which lithium is included in the negative electrode), the battery was decomposed, a thickness was measured, and an electrode thickness change was calculated.
Charge Conditions: CC (constant current)/CV (constant voltage) (5 mV/0.005 C current cut-off)
Discharge Conditions: CC (constant current) conditions 1.5 V
Capacity retention ratio was derived by the calculation as follows. Capacity Retention Ratio (%) = (discharge capacity at the 50th cycle/discharge capacity at the first cycle) × 100

**[Table 1]**

| Battery | Compression conductivity (S/cm) | Hydrogen gas production amount (kPa) | Capacity retention ratio (%) |
|---|---|---|---|
| Example 1 | 1.6 | 2 | 83 |
| Example 2 | 6.9 | 0.7 | 79 |
| Example 3 | 0.2 | 12 | 75 |
| Example 4 | 0.4 | 10 | 71 |
| Example 5 | 0.09 | 15 | 69 |
| Example 6 | 0.11 | 11 | 70 |
| Example 7 | 1.3 | 3.6 | 81 |
| Example 8 | 2.4 | 1.6 | 78 |
| Example 9 | 4.9 | 1.2 | 74 |
| Example 10 | 1.4 | 1.2 | 76 |
| Example 11 | 0.6 | 4.2 | 77 |
| Comparative Example 1 | 0.017 | 50 | 40 |
| Comparative Example 2 | 2.7 | 35 | 64 |
| Comparative Example 3 | 0.14 | 30 | 53 |
| Comparative Example 4 | 0.02 | 22 | 59 |
| Comparative Example 5 | 0.07 | 25 | 62 |
| Comparative Example 6 | 0.032 | 27 | 55 |

Referring to Table 1, in the cases of Examples 1 to 11, in which the negative electrode active material particles according to the present disclosure were applied, it can be confirmed that the compression conductivity, the production amount of the hydrogen gas and the capacity retention ratio were all evaluated excellent. On the contrary, in the case of Comparative Example 1, in which a coating layer was not formed, it can be found that the conductivity was low, side reactions producing a large amount hydrogen gas were generated, and life characteristics were evaluated inferior. In the case of Comparative Example 2 in which a polymer not including an alkyl group at a side chain was applied, it was confirmed that the conductivity was improved, but defects of producing the hydrogen gas was not settled, and life characteristics were still inferior.

In addition, considering Comparative Examples 3 and 4, in which chain-type monomer units were applied as the polymers of the coating layers, in the case of Comparative Example 4, it can be confirmed that the conductivity was significantly inferior, and though a heteroatom was included, the conductivity was no better than an inferior level, and the limitation of a chain-type was not overcome. In contrast to the Examples in which an aromatic cyclic monomer was applied, the adhesiveness between the coating layer and the core was low, the separation phenomenon of the coating layer occurred, and the production amount of the gas was large.

In addition, in the case of Comparative Example 5, which is different from the Examples only in that a heteroatom is not included, it can be confirmed that free electrons moving through the π-π bonds of a main chain were insufficient, and the conductivity was inferior. In the case of Comparative Example 6, in which a heteroatom was included, but an aliphatic cyclic monomer unit was applied, it can be confirmed that the conductivity was significantly inferior in view of the absence of the π-π bonds in a main chain.

Through the above discussion, in the case where the silicon-based particles are applied as the negative electrode active material, it can be found preferable that the polymer according to the present disclosure is applied as the coating layer of the silicon-based particles in order to prevent side reactions like the production of hydrogen gas during preparing an aqueous slurry and to improve the conductivity and lifetime.

## Claims

1. A negative electrode active material particle comprising a core and a coating layer on the core,
wherein the core comprises a silicon-based particle, and
the coating layer comprises a polymer comprising an aromatic cyclic monomer unit including a heteroatom and having an alkyl group at a side chain.

2. The negative electrode active material particle according to claim 1, wherein the alkyl group is an alkyl group of 1 to 50 carbon atoms.

3. The negative electrode active material particle according to claim 1, wherein the heteroatom is one or more selected from the group consisting of nitrogen (N), sulfur (S) and phosphor (P).

4. The negative electrode active material particle according to claim 1, wherein
the heteroatom is one or more selected from the group consisting of nitrogen (N) and sulfur (S), and
the alkyl group is an alkyl group of 3 to 20 carbon atoms.

5. The negative electrode active material particle according to claim 1, wherein the polymer comprises at least one selected from the group consisting of a polymer comprising a repeating unit of Formula 1, a polymer comprising a repeating unit of Formula 2, and a polymer comprising a repeating unit of Formula 3: 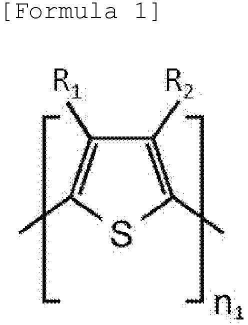 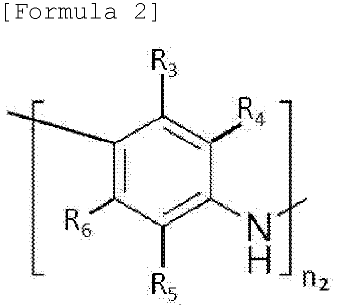 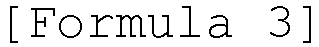 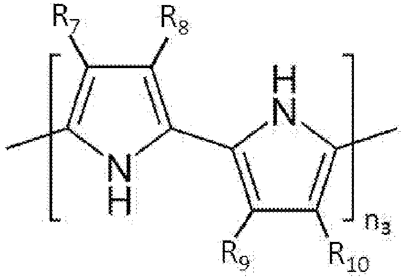
in Formula 1, R₁ and R₂ are each independently one among hydrogen and an alkyl group of 5 to 15 carbon atoms, at least one among R₁ and R₂ is an alkyl group of 5 to 15 carbon atoms, and n₁ is an integer of 1 to 10,000,
in Formula 2, R₃ to R₆ are each independently one among hydrogen and an alkyl group of 5 to 15 carbon atoms, at least one among R₃ to R₆ is an alkyl group of 5 to 15 carbon atoms, and n₂ is an integer of 1 to 10,000, and
in Formula 3, R₇ to R₁₀ are each independently one among hydrogen and an alkyl group of 5 to 15 carbon atoms, at least one among R₇ to R₁₀ is an alkyl group of 5 to 15 carbon atoms, and n₃ is an integer of 1 to 10,000.

6. The negative electrode active material particle according to claim 1, wherein a weight average molecular weight of the polymer is from 200 g/mol to 2,000,000 g/mol.

7. The negative electrode active material particle according to claim 1, wherein the polymer is comprised in 0.1 wt% to 50 wt% in the negative electrode active material particles.

8. The negative electrode active material particle according to claim 1, wherein an average particle diameter (D₅₀) of the silicon-based particles is from 0.1 µm to 100 µm.

9. A negative electrode comprising the negative electrode active material particles of claim 1.

10. A secondary battery comprising the negative electrode of claim 9.
